# EUROPEAN PATENT SPECIFICATION

(11) **EP 4 135 429 B1**
(45) Date of publication and mention of the grant of the patent: **11.03.2026**
(21) Application number: 21190963.5
(22) Date of filing: 12.08.2021
(51) Int. Cl.: H04W 68/00, H04W 76/28

(54) **A DOWNLINK MULTICAST SERVICE TRANSMISSION**
DOWNLINK-MULTICAST-DIENSTÜBERTRAGUNG
TRANSMISSION DE SERVICE MULTIDIFFUSION EN LIAISON DESCENDANTE

(43) Date of publication of application: 15.02.2023
(73) Proprietor: Nokia Technologies Oy, 02610 Espoo (FI)
(72) Inventor: BELLING, Horst Thomas, 85435 Erding (DE); GODIN, Philippe, 78000 Versailles (FR); NASSAR, Mohamed Amin, 81477 Munich (DE)
(74) Representative: Nokia EPO representatives

(56) References cited:
- EP-A1- 3 598 812
- WO-A1-2020/150704
- WO-A1-2020/154622
- QUALCOMM: "Group Paging for MBS Multicast", vol. RAN WG3, no. Online; 20210816 - 20210826, 6 August 2021 (2021-08-06), XP052035435, Retrieved from the Internet <URL:https://ftp.3gpp.org/tsg_ran/WG3_Iu/TSGR3_113-e/Docs/R3-213651.zip R3-213651 MBS Group Paging.doc> [retrieved on 20210806]
- LENOVO ET AL: "Discussion on Group paging for Multicast Session Activation Notification", vol. RAN WG3, no. Online; 20210816 - 20210826, 6 August 2021 (2021-08-06), XP052035515, Retrieved from the Internet <URL:https://ftp.3gpp.org/tsg_ran/WG3_Iu/TSGR3_113-e/Docs/R3-213743.zip R3-213743 Multicast Session Activation.docx> [retrieved on 20210806]
- HUAWEI ET AL: "Further clarification for MBS session activation and deactivation", vol. SA WG2, no. e-meeting; 20210816 - 20210827, 10 August 2021 (2021-08-10), XP052053845, Retrieved from the Internet <URL:https://ftp.3gpp.org/tsg_sa/WG2_Arch/TSGS2_146E_Electronic_2021-08/Docs/S2-2106121.zip S2-2106121 Further clarification for MBS session activation and deactivation v1.5.docx> [retrieved on 20210810]

## Description

### FIELD

Various example embodiments relate to downlink multicast service transmission.

### BACKGROUND

Network may provide the same service and a selected content data simultaneously to a number of user equipments, UEs. In broadcast service the same service and the selected content data are provided to all UEs in a geographical coverage area that are authorized to receive the service and content. **In** multicast service the same service and the selected content data are provided to a dedicated set of UEs. Examples are provided in 3GPP Draft documents R3-213651, R3-213743 and S2-2106121.

### SUMMARY

The invention is defined by the appended claims.

### BRIEF DESCRIPTION OF THE DRAWINGS

Fig. 1 shows an example system in accordance with at least some embodiments;
Fig. 2 shows, by way of example, signalling between entities;
Fig. 3 shows, by way of example, a block diagram of an apparatus;
Fig. 4 shows, by way of example, a flowchart of a method;
Fig. 5 shows, by way of example, a flowchart of a method;
Fig. 6 shows, by way of example, a flowchart of a method;
Fig. 7 shows, by way of example, a flowchart of a method; and
Fig. 8 shows, by way of example, a flowchart of a method;

### DETAILED DESCRIPTION

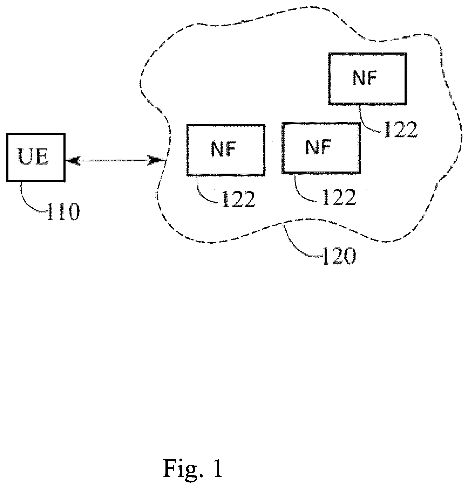

Fig. 1 shows an example system in accordance with at least some embodiments. The system comprises a user equipment, UE, 110 and a communication network 120. The UE 110 is able to receive data from or via the communication network 120 via point-to-multipoint, PTM, and point-to-point, PTP, connection.

The communication network 120 may be a public land mobile network, PLMN, or a non-public network, NPN, for example as defined in 3GPP standardization specification TS23.501. A NPN may be a standalone NPN, SNPN, or Public Network Integrated NPN, PNI-NPN. The communication network 120 may be a non-3GPP network, for example a cable network, a network based on a wireless network protocols based on IEEE 802.11, Wi-Fi, or a Wireless Local Area Network, WLAN. The communication network 120 or a radio access may be based on long term evolution advanced, LTE Advanced, LTE-A, or new radio, NR, also known as fifth generation, 5G, without restricting the embodiments to such an architecture, however. The embodiments may also be applied to other kinds of communications networks having suitable means by adjusting parameters and procedures appropriately. Some examples of other options for suitable systems and radio access networks, RANs, are the universal mobile telecommunications system (UMTS) radio access network (UTRAN or E-UTRAN), long term evolution (LTE, the same as E-UTRA), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

A non-3GPP access, for example a WLAN access may be arranged via non-3GPP interworking function, N3IWF. A N3IWF is configured to provide an access point to the 5G core network (5GC) outside the 5G radio access network, RAN. A N3IWF is configured to route messages outside the 5G RAN, of non-3GPP networks, over Internet Protocol, IP, security tunnels. The AMF of the 5G core network is configured to implement non-access-stratum, NAS, security, e.g. ciphering and integrity protection algorithms.

In Fig. 1 a user equipment, UE, 110 comprises a mobile equipment including wireless mobile communication device operating with or without a subscriber identity module, SIM. The subscriber identifier may comprise a subscriber identity module, SIM, a universal subscriber identity module, USIM, or any corresponding subscriber identifier, for example an executable or a programmable identifier. A subscriber identifier enables subscriber identification, for example for authentication between the UE and a network. A user equipment may include, but is not limited to, a smartphone, a cellular phone, a laptop computer, a tablet computer, a machine-to-machine node, M2M node, a machine-type-communication node, MTC node, a massive machine-type-communication node, mMTC node, an internet-of-things node, IoT node, a car telemetry unit, or any terminal or entity enabling wireless communication or access to a wireless network. A UE may be a device using a wireless modem (alarm or measurement device, etc.), laptop and/or touch screen computer, tablet, game console, notebook, and multimedia device. A UE may be a device having capability to operate in Internet of Things (IoT) network which is a scenario in which objects are provided with the ability to transfer data over a network without requiring human-to-human or human-to-computer interaction.

5G enables using multiple input - multiple output (MIMO) technology at both UE and network side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in a constellation may cover several satellite-enabled network entities that create on-ground cells. The on-ground cells may be created through an on-ground relay node or by a gNB located on-ground or in a satellite.

In Fig. 1 the communication network 120 is equipped with one or more network functions, NF, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of two or more of these functions.

In case of a third generation partnership project, 3GPP, fifth generation, 5G, system service based architecture, SBA, core network, NFs may comprise at least some of an access and mobility management function, AMF, a session management function, SMF, a network slice selection function, NSSF, a network exposure function, NEF, a network repository function, NRF, a unified data management, UDM, a unified data repository, UDR, an authentication server function, AUSF, a policy control function, PCF, and an application function, AF. A NEF is configured to provide access to exposed network services and capabilities. A UDM is configured to manage network user data in a single, centralized element. A UDM is configured to host functions related to data management, such as an authentication credential repository and processing function, ARPF, which is configured to select an authentication method based on a subscriber identity and configured policy. A UDR facilitates the share and the provisioning of subscriber-related data throughout services of a 3GPP system.

The communication network 120 may further comprise a security edge protection proxy, SEPP, configured to operate as a security edge node or gateway. The NFs may communicate with each other using representational state transfer, REST, application programming interfaces, for example. These may be known as RESTful APIs. Further examples of NFs include NFs related to gaming, streaming or industrial process control. The system may comprise also nodes from 3G or 4G node systems, such as home subscriber server, HSS, and a suitable interworking function for protocol translations between e.g. Diameter and JSON-based RESTful APIs. While described herein primarily using terminology of 5G systems, the principles as described herein are applicable also to other communication networks, such as 4G networks and non-3GPP networks, for example.

While the example of Fig. 1 has one communication network, 120, two or more networks may be present. In case of multi-networks, in Fig 1, the SEPP is a network node at the boundary of an operator's network that may be configured to receive a message, such as an Hypertext Transfer Protocol, HTTP, request or HTTP response from an NF, to apply protection for sending and to forward the thus reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF.

A physical link from a user device to the network node is called uplink, UL, or reverse link and the physical link from the network node to the user device is called downlink, DL, or forward link. Network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network, CN, or next generation core, NGC. Depending on the system, the counterpart on the CN side can be a serving gateway, S-GW, routing and forwarding user data packets, packet data network gateway, P-GW, for providing connectivity of user devices, UEs, to external packet data networks, or mobile management entity, MME, etc.

A multicast broadcast service, MBS, refers to a point-to-multipoint service configured to provide the same service and a specific content simultaneously to a number of UEs. MBS includes a multimedia broadcast multicast service, MBMS, which refers to a point-to-multipoint interface specification for existing and upcoming 3GPP cellular networks, which is designated to provide delivery of broadcast and multicast services, both within a cell as well within the core network. The specification is referred to as evolved multimedia broadcast multicast service, eMBMS, or LTE broadcast, when transmissions are delivered through an LTE network. 5G CN is configured to receive a single copy of MBS data packets and to deliver, in PTP, separate copies of the MBS data packets to individual UEs via UE-specific PDU sessions. In PTP, each UE is associated to MBS session via a PDU session. In case of PTM, 5G CN is configured to receive a single copy of MBS data packets and to deliver a single copy of the MBS data packets to RAN node.

Service announcement is a mechanism to distribute information to UEs about one or several available multicast/broadcast services.

In multicast communication service, a distributed service announcement includes information about the service required for service reception, such as IP multicast address(es) and optionally other service related parameters. A UE joins a session by indicating to a 5GC that the UE wants to receive multicast data. The session may be identified by a multicast session ID as distributed in the service announcement. The UE session join request for joining the session may trigger a session establishment, where transmission resources are established for transferring DL multicast data between the 5GC and the NG RAN. After the session has been established, the multicast data is transmitted to the UE, and other UEs that have been authorized to receive the multicast content. After the data has been transmitted and/or the multicast session period expired, the UE sends a session leave message and leaves the multicast session. After there is no need to transfer multicast data, resource in 5GC and the multicast session are released. A multicast MBS session requires the 5GC to authorize the UE based on authorization information, for example preconfigured or provided by the AF. UE authorization for a specific multicast MBS session may be performed via a service announcement, for example.

In broadcast communication service, a distributed service announcement includes information about the service required for service reception, such as IP multicast address(es) and optionally other service related parameters. A session is established for enabling DL broadcast between a 5GC and a NG RAN. After that, data is broadcasted over air interface. After the data has been transferred and/or there is no more need to transmit broadcast data, the session and 5GC resources are released.

In order to arrange a MBS session, a UE is configured to perform reception of MBS data. The MBS data may be transferred to the UE via established point-to-multipoint, PTM, or point-to-point, PTP, connection. A UE is configured to perform signalling for joining and leaving a MBS session.

A RAN is configured to control switching between PTM and PTP delivery per UE. A RAN is configured to support a MBS sessions during a handover. A NG RAN is configured to deliver data packets from 5G shared for multiple UEs over radio using PTM and/or PTP, and to control a switch between PTM/PTP deliver per UE. A NG RAN is configured to support MBS session continuity by driving handovers, and to support notification of MBS session activation over radio interface.

An AMF is configured to select a SMF with MBS capabilities. A SMF is configured to discover a multicast broadcast SMF, MB SMF, for a MBS session, and to authorize a MBS session join operation, if applicable. The SMF is configured to interact with the MB SMF in order to obtain MBS data for individual delivery and in order to manage MBS session content. The SMF is configured to interact with RAN for shared data transmission resource establishment.

A MB SMF is configured to handle a MBS session management, including quality of service, QoS, control. A MB SMF is configured to control transport of MBS flows from a multicast broadcast user plane function, MB UPF, to RAN. A user plane function, UPF, is configured to support features and capabilities to facilitate user plane operation, for example packet routing and forwarding, interconnection to a data network, policy enforcement and data buffering. A MB SMF is configured to arrange MB UPF for multicast broadcast, MB, flows transport based on a local policy or policy rules from a policy control function, PCF, which provides policy rules for control plane functions. A MB SMF is configured to interact with SMF in order to modify a protocol data unit, PDU, session associated with MBS. A MB SMF is configured to interact with a RAN, via AMF and SMF, in order to establish data transmission resources between MB UPF and RAN nodes for 5GC shared MBS traffic delivery method. A MB SMF is configured to control data transport using 5GC individual MBS traffic delivery method.

An AF is configured to provide MBS service information or a request for MBS service from 5GC by providing service information, which may include QoS requirement for 5GC. An AF is configured to negotiate with a NEF for MBS related service exposure. An AF is configured to allocate a temporary mobile group identity, TGMI, and to start a MBS session and MBS transmission. An AF is configured to arrange resources for a MBS session set up in MB UPF and NG RAN for shared MBS delivery. An AF is configured to signal with NG RAN and MB SMF for MBS session management. An AF is configured to select NG RANs for notification of MBS session activation and for broadcast. An AF is configured to signal with NG RAN for NG RAN MBS capability, and to interact with NEF for MBS related service exposure. An AF is authorized by 5GC to deliver MBS data to 5GC and/or to interact with 5GC. For signalling exchange with 5GC, NEF / MB SF are configured to perform authorization to external AF in order to determine, whether interaction of 5GC is allowed or not.

A NEF is configured to provide an interface to AFs for MBS procedures including service provisioning, MBS session- and QoS management. A NEF is configured to interact with AF and MB SMF for MBS session operations, determination of transport parameters and session transport. A NEF is configured to select of serving MB SMF for a MBS session.

A MB SMF is configured to handle packet transport functionalities to any IP multicast enabled application, such as framing, multiple flows, packet forward error correction, FEC, and encoding. A MB SMF is configured to handle MBS delivery of input files as objects or object flows.

UDM is configured to support management of subscriptions for authorization and for MBS sessions. The subscriber profile in the UDM includes subscription information in order to give a subscription for MBS services in the UDM. The subscription for MBS may include allowance to join any multicast service or allowance to join the indicated specific multicast service. The MBS subscription data is provided by the UDM to the SMF during PDU session establishment, as defined for example in TS23.502, using Numd_SDM service for subscription data type "UE context in SMF data". The SMF selection subscription data is provided by the UDM to the AMF as described in TS23.502. A UDR supports management of UE authorization information for MBS session. An UE authorization for multicast services may define, whether a UE is authorized to receive any multicast session data at all, or whether and how a UE is authorized to receive a particular multicast service. If the UE is not authorized to receive multicast session data, the network will not send the data to the UE even if the multicast session is open to any UEs.

A MBS session identifier, ID, is used to identify the MBS session throughout the 5G system, on an interface towards AF, and between AF and UE, and towards UE. The MBS session ID may comprise a source specific IP multicast address for a multicast session, or a temporary mobile group identity, TGMI, for identifying a multicast or a broadcast session. The TMGI is a radio resource configured to identify a MBS bearer service. This may be utilized instead of using IP multicast address and access point name. A TMGI is allocated by multicast broadcast service center, MB SC, and the TMGI for a specific MBS is provided to a UE during MBS activation procedure. The UE may obtain at least one MBS session ID via MBS service announcement. For a multicast session, a source specific IP multicast address can be assigned by 5GC or an external network. The source specific IP multicast address is used to identify a multicast session and it comprises two IP addresses: one for an IP unicast address used as source address in IP packets for identifying the source of the multicast service, like AF/AS, and the other for an IP multicast address used as destination address in related IP packets for identifying a multicast service associated with the source.

In IoT environment, for example, power of the devices may be saved by keeping the devices in a power saving mode and by waking up the devices to listen to paging at specific times.

In unicast reception, a UE may be in a power saving mode, PSM, where the UE sleeps for indefinite time, after a certain timer expires. The timer has been negotiated with the network via NAS signalling. The times starts when the UE enters into idle mode. The UE exits the PSM once there is UL data to be sent, but it cannot receive DL data or monitor paging while PSM is entered. In case of discontinuous reception, DRX, DRX parameters are negotiated with the network via NAS signalling. DRX is used on lower levels in order to define active on-times to monitor paging control channel, PCCH, which enables readiness for paging reception. In DRX mode the UE can sleep during inactive off-times. DRX may be in range of milliseconds. In extended DRX, eDRX, an extended idle mode DRX cycle length is negotiated with the network via NAS signalling. The cycle length of eDRX may be from order of seconds to hours or days. In eDRX mode the UE is reachable for paging in specific paging hyperframes, PH, which correspond to a specific set of hyper system frame number, H-SFN, values. The PH computation is a formula that is function of the extended idle mode DRX cycle, and a UE specific identifier, as described in TS36.304. A paging time window (PTW) is UE-specific and is determined by a PH, a starting position within the PH and an ending position, as described in TS36.304.

There is provided method(s) for communicating the activation times for reception of data, such as multicast data. The methods as disclosed herein enables power saving of the IoT devices. The methods as disclosed herein enables waking up the needed devices at the same time for reception of data, such as multicast data. This way periods of inactivity or sleep mode of the IoT devices may be optimized which enables efficient power saving. In at least some embodiments, the MBS session is multicast service session. In at least some embodiments, the MBS data and/or MBS session content is multicast data.

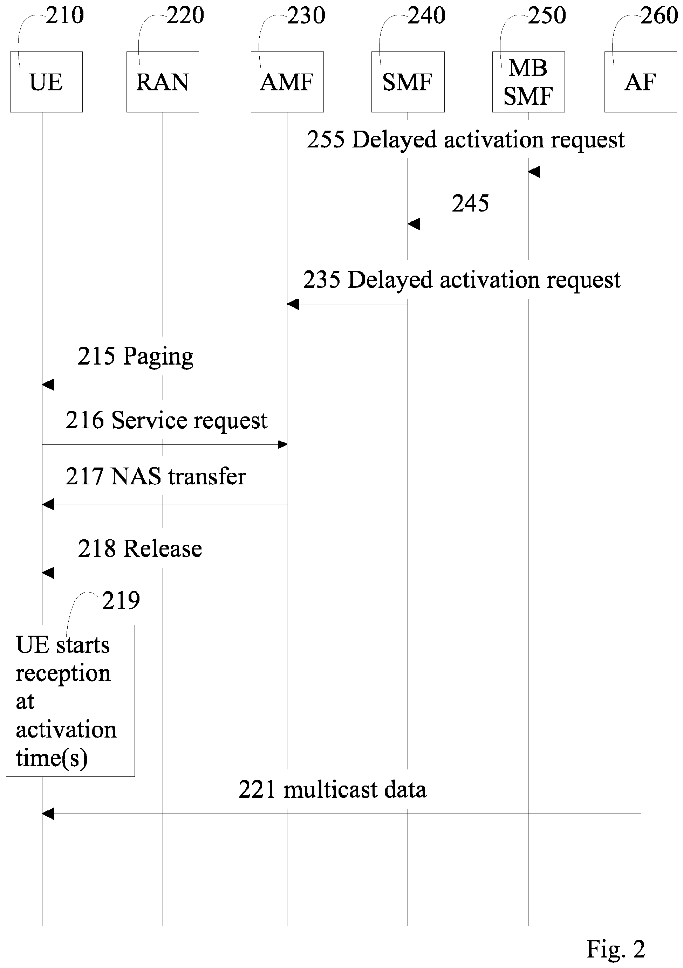

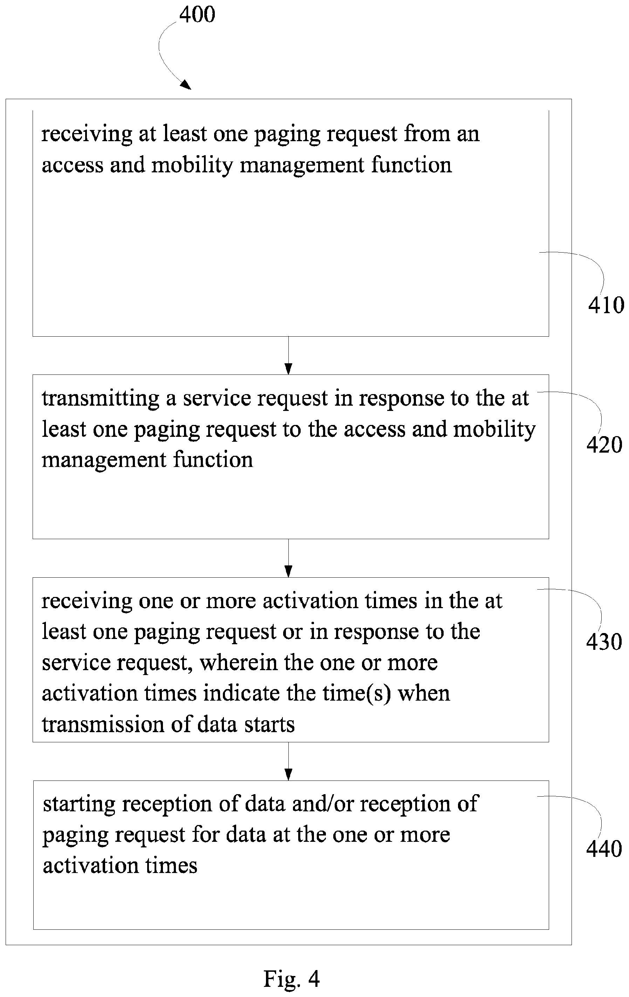

Flowcharts of the methods are shown in Figures 4, 5, 6, 7 and 8. At least some of the phases of the methods are described in the context of Fig. 2 below.

Fig. 2 shows, by way of example, signalling between entities. Multicast service session is configured by an application function, AF 260. AF transmits 255 a configuration message, e.g. a delayed activation request, to multicast broadcast session management function, MB SMF 250. The delayed activation request may be sent via a network exposure function, NEF, and/or multicast broadcast service function, MBSF. The delayed activation request comprises, for example, indications on e.g. a multicast service session ID and activation time(s). The delayed activation request indicates at least the time(s) when the transmission of multicast data starts. Activation time may be indicated as one time or fixed repeated times, for example. Activation time may be indicated e.g. as every hour plus x minutes, a fixed time each day, etc.

MB SMF 250 transmits 235 the delayed activation request to AMF(s) 230 handling RAN 220 nodes with UEs 210 in MBS session. The delayed activation request may be transmitted 245 via SMF 240, as shown in the example of Fig. 2. The delayed activation request received by the AMF 230 comprises also a list of UEs served by the SMF and/or a list of UEs in idle mode. The list of UEs is added by the SMF.

AF 260 may provide information about the activation times when configuring the multicast service session at MB SMF. The configuration may be performed via NEF and/or MBSF. Alternatively, the activation times may be stored in a database from which the MB SMF may retrieve the activation times. Then, MB SMF may determine alone when to generate the delayed activation request message and send the message to AMF, possibly via SMF.

Let us consider that the UE 210 has negotiated an eDRX cycle and joined the multicast service session. At eDRX paging time window for UEs in idle mode, the AMF 230 pages 215 the UE 210 in the paging hyperframes, PH, or time intervals calculated according to the eDRX procedures before the transmission of the multicast broadcast data starts. For example, AMF may send a paging request to all UEs in the list of UEs in idle mode. The AMF 230 indicates the activation time, or transmission start time, to the UE 210. The activation time may be indicated in absolute time or a time offset after the paging or after the delayed activation request. If the activation time is expressed as a time offset after the delayed activation request, the time between the reception of the delayed activation request and the reception of the service request is subtracted from the received activation time and the result is provided as activation time in response to the service request. The activation time(s), or transmission start time(s), may be indicated within the paging request 215, for example. Alternatively, the AMF 230 may indicate the activation time(s), or transmission start time(s), in response to a service request received 216 from the UE 210 in response to the paging. The response to the service request may be transmitted 217 from the AMF 230 to UE 210 as non access stratum, NAS, transfer 217, i.e. a NAS message. Then, the AMF 230 may release 218 the context by transmitting a release context message to the UE. The context comprises all information describing a particular MBS session in the 5G system.

If several PHs for the UE are possible before the transmission start, the paging may be repeated for redundancy, or performed at the last of those frames.

The UE starts 219 reception of the multicast data at the indicated activation time(s). The UE receives 221 multicast data from the AF 260 via DL link. For example, in multicast communication, the AF transmits the data at the one or more activation times to the PLMN, which forwards the data to UEs participating the multicast service session.

If a UE is in several multicast or broadcast sessions at the same time, it will wake up at the activation times of each of those sessions. Thus, the UE may receive activation times corresponding to transmission starting times of MBS data in multiple different MBS sessions, wherein the UE is participating in. Then, the UE may start reception of MBS data at the activation times of each of the multiple different MBS sessions.

A UE may apply eDRX and listen to paging at the indicated intervals.

The MB SMF may receive one or more subscription requests from one or more SMFs with respect to notifications about delayed activation of one or more multicast service sessions. The MB SMF may receive the multicast service session identifier as part of the subscription request from the SMF. The MB SMF may assign a unique subscription correlation identifier to the subscription request. The MB SMF may provide the subscription correlation information in response to the subscription request from the SMF. The MB SMF may determine the one or more SMFs that serve one or more of the one or more multicast service sessions based on the subscription request.

The SMF may receive at least one request to join a multicast service session from one or more user equipments. The SMF may store, for each received and accepted join request, the information that the user equipment is participating in the multicast service session.

The SMF may receive, from MB SMF, a notification about the delayed activation of one or more multicast service sessions, wherein the delayed activation request comprises at least the activation times. The SMF may determine at least one user equipment affected by the one or more multicast service sessions based on the stored information about user equipment participating in the multicast service sessions. The SMF may transmit to each AMF serving at least one of the determined at least one user equipment, one or more delayed activation requests, wherein the delayed activation requests comprise one or more activation times and one or more user equipment identifiers. The SMF may subscribe at a Multicast/Broadcast Session Management Function, MB-SMF to notifications about the delayed activation of one or more multicast service. The SMF may provide identifiers of one or more multicast sessions as part of the subscription request to the Multicast/Broadcast Session Management Function. The SMF may receive subscription correlation information in response to the subscription request from the Multicast/Broadcast Session Management Function. The SMF may determine, when receiving the notification about the delayed activation of one or more multicast service sessions, the one or more multicast service sessions based on the subscription correlation information. The notification about the delayed activation comprises subscription correlation information and/or one or more multicast service session identifiers and the one or more activation times.

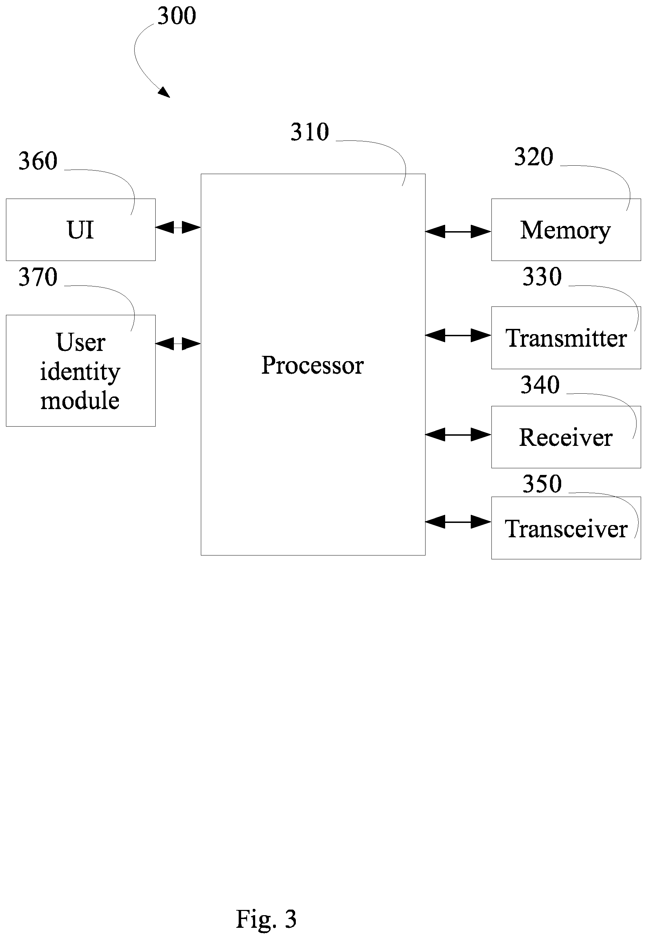

Fig. 3 shows, by way of example, an apparatus capable of performing the method(s) as discloses herein. Illustrated is device 300, which may comprise, for example, a mobile communication device such as mobile 110 of Fig. 1 or Fig. 2, or a network entity or network function such as AMF 230, MB SMF 250 or AF 260 of Fig. 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in Fig. 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some example embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected.

Fig. 4 shows, by way of example, a flowchart of a method 400. The phases of the method 400 may be performed in an apparatus such as a UE or an IoT device, for example, wherein the UE may comprise means for performing the method, or in a control device configured to control the functioning thereof, when installed therein. The method 400 comprises receiving 410 at least one paging request from an access and mobility management function. The method 400 comprises transmitting 420 a service request in response to the at least one paging request to the access and mobility management function. The method 400 comprises receiving 430 one or more activation times in the at least one paging request or in response to the service request, wherein the one or more activation times indicate the time(s) when transmission of data starts. The method 400 comprises starting 440 reception of data and/or reception of paging request for data at the one or more activation times.

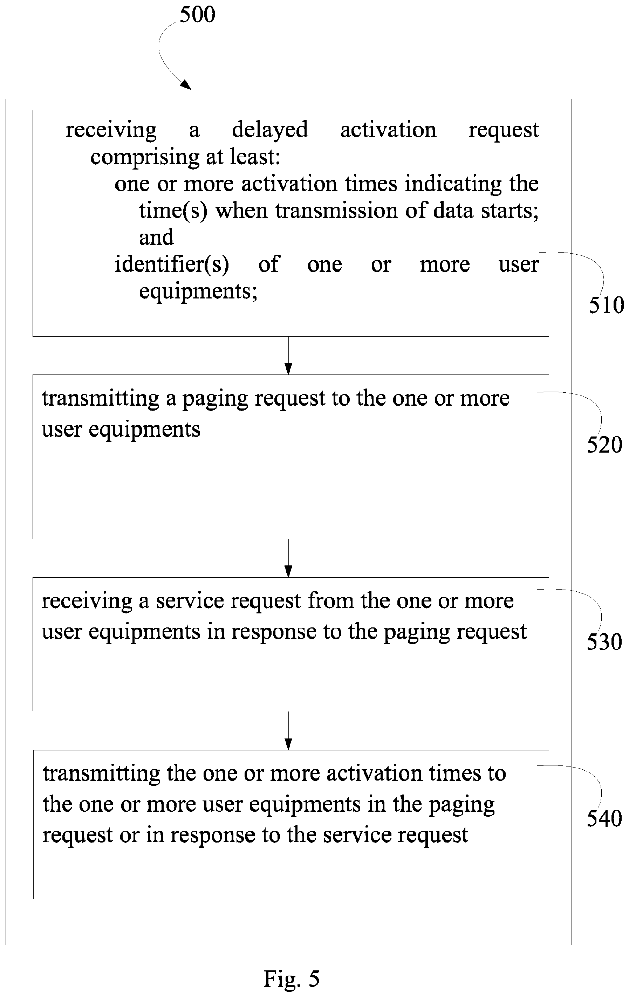

Fig. 5 shows, by way of example, a flowchart of a method 500. The phases of the method 500 may be performed in an apparatus such as a network function, for example AMF, comprising means for performing the method, or in a control device configured to control the functioning thereof, when installed therein. The method 500 comprises receiving 510 a delayed activation request comprising at least: one or more activation times indicating the time(s) when transmission of data starts; and identifier(s) of one or more user equipments. The method 500 comprises transmitting 520 a paging request to the one or more user equipments. The method 500 comprises receiving 530 a service request from the one or more user equipments in response to the paging request. The method 500 comprises transmitting 540 the one or more activation times to the one or more user equipments in the paging request or in response to the service request.

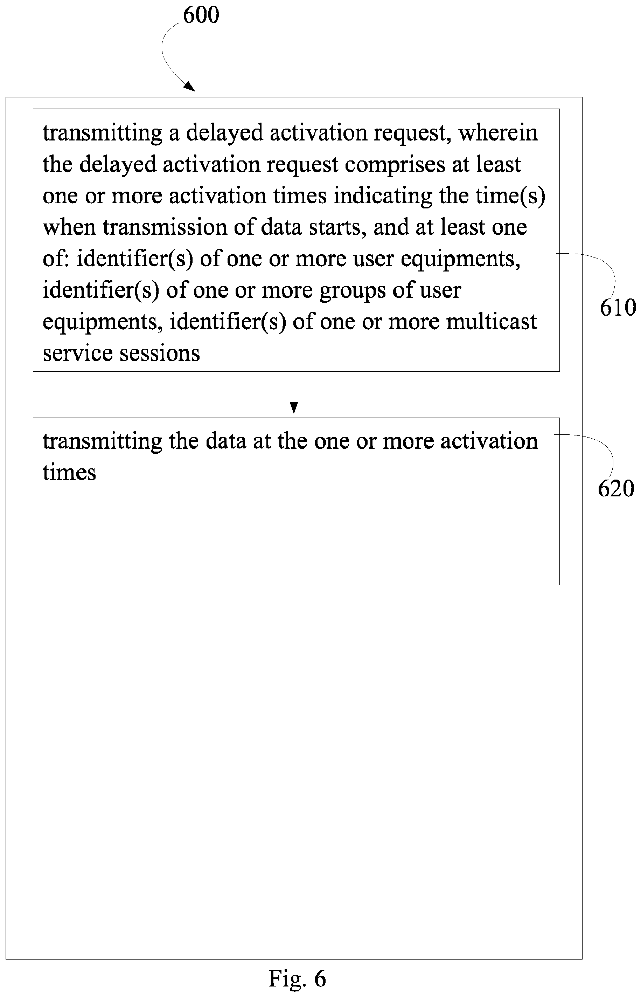

Fig. 6 shows, by way of example, a flowchart of a method 600. The phases of the method 600 may be performed in an apparatus such as a network function, for example AF, comprising means for performing the method, or in a control device configured to control the functioning thereof, when installed therein. The method 600 comprises transmitting 610 a delayed activation request, wherein the delayed activation request comprises at least one or more activation times indicating the time(s) when transmission of data starts, and at least one of: identifier(s) of one or more user equipments, identifier(s) of one or more groups of user equipments, identifier(s) of one or more multicast service sessions. The method 600 comprises transmitting 620 the data at the one or more activation times.

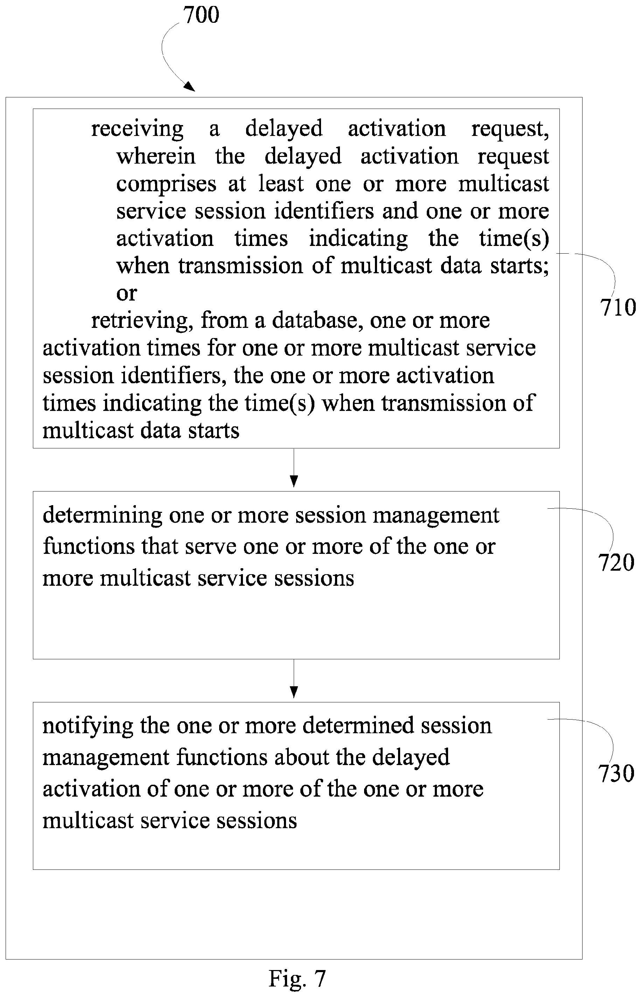

Fig. 7 shows, by way of example, a flowchart of a method 700. The phases of the method 700 may be performed in an apparatus such as a network function, for example MB SMF, comprising means for performing the method, or in a control device configured to control the functioning thereof, when installed therein. The method 700 comrpises receiving 710 a delayed activation request, wherein the delayed activation request comprises at least one or more multicast service session identifiers and one or more activation times indicating the time(s) when transmission of multicast data starts; or retrieving, from a database, one or more activation times for one or more multicast service session identifiers, the one or more activation times indicating the time(s) when transmission of multicast data starts. The method 700 comprises determining 720 one or more session management functions that serve one or more of the one or more multicast service sessions. The method 700 comprises notifying 730 the one or more determined session management functions about the delayed activation of one or more of the one or more multicast service sessions.

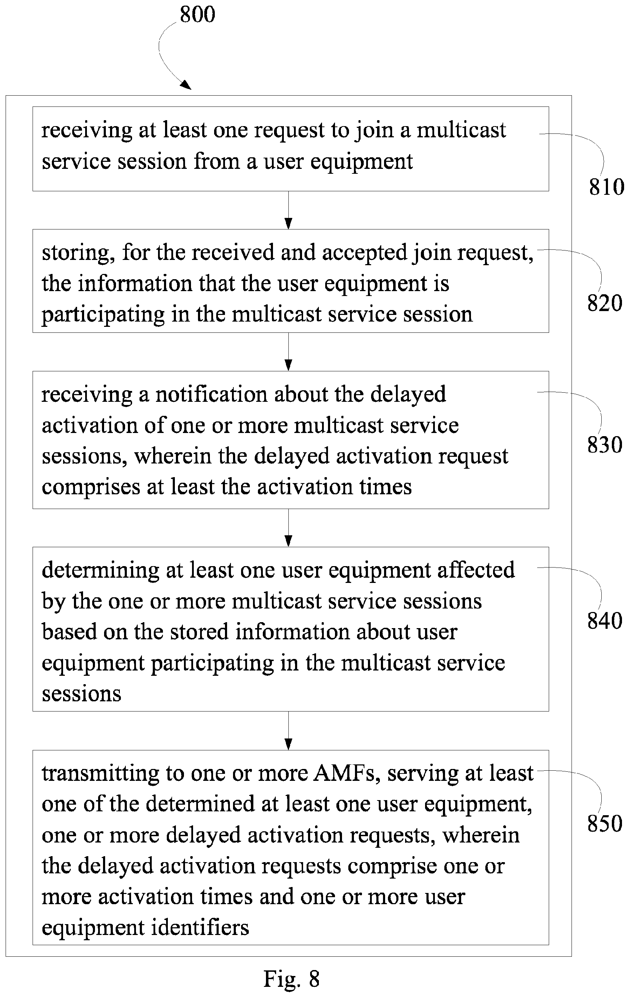

Fig. 8 shows, by way of example, a flowchart of a method 800. The phases of the method 800 may be performed in an apparatus such as a network function, for example SMF, comprising means for performing the method, or in a control device configured to control the functioning thereof, when installed therein. The method 800 comprises receiving 810 at least one request to join a multicast service session from a user equipment. The method 800 comprises storing 820, for the received and accepted join request, the information that the user equipment is participating in the multicast service session. The method 800 comprises receiving 830 a notification about the delayed activation of one or more multicast service sessions, wherein the delayed activation request comprises at least the activation times. The method 800 comprises determining 840 at least one user equipment affected by the one or more multicast service sessions based on the stored information about user equipment participating in the multicast service sessions. The method 800 comprises transmitting 850 to one or more access and mobility management functions, AMFs, serving at least one of the determined at least one user equipment, one or more delayed activation requests, wherein the delayed activation requests comprise one or more activation times and one or more user equipment identifiers.

## Claims

1. An apparatus (210) comprising means for:
- receiving (410) at least one paging request from an access and mobility management function;
- transmitting (420) a service request in response to the at least one paging request to the access and mobility management function;
- wherein one or more activation times are included in the at least one paging request or in response (430) to the service request, wherein the one or more activation times indicate the time(s) when transmission of multicast data for one or more multicast service session starts; and
- starting reception (440) of the multicast data at the one or more activation times.

2. The apparatus of claim 1, comprising means for:
receiving a release context message from the access and mobility management function in response to the service request.

3. The apparatus of any of the claims 1 to 2,
wherein the paging request is transmitted to the apparatus in Extended Discontinuity Reception, eDRX, mode within Paging Hyperframes, PH, calculated according to Extended Discontinuity Reception procedures.

4. An apparatus (230) including an access and mobility management function, AMF, comprising means for:
- receiving a delayed activation request (510) comprising at least:
o one or more activation times indicating the time(s) when transmission of multicast data for one or more multicast service session starts; and
o identifier(s) of one or more user equipments;
- transmitting a paging request (520) to the one or more user equipments;
- receiving a service request (530) from the one or more user equipments in response to the paging request; and
- transmitting (540) the one or more activation times to the one or more user equipments in the paging request or in response to the service request.

5. The apparatus of claim 4, comprising means for:
transmitting a release context message to the user equipment in response to the service request.

6. The apparatus of claim 4 or 5,
wherein the one or more user equipments are in Extended Discontinuity Reception, eDRX, mode and the paging request is transmitted to the one or more user equipments within Paging Hyperframes, **PH,** calculated according to Extended Discontinuity Reception procedures.

7. The apparatus of any of claims 4 to 6,
wherein when an activation time of the one or more activation times is expressed as a time offset after the delayed activation request, the time between the reception of the delayed activation request and the reception of the service request is subtracted from the received activation time and the result is provided as activation time in response to the service request.

8. An apparatus (260) including an application function, AF, comprising means for
- transmitting (610) a delayed activation request, wherein the delayed activation request comprises one or more activation times indicating the time(s) when transmission of multicast data for one or more multicast service session starts, and at least one of: identifier(s) of one or more user equipments, identifier(s) of one or more groups of user equipments, identifier(s) of one or more multicast service sessions; and
- transmitting (620) the multicast data for one or more multicast service session at the one or more activation times.

9. An apparatus (250) including a multicast broadcast session management function, MB SMF, comprising means for
- at least one of:
o receiving (710) a delayed activation request, wherein the delayed activation request comprises one or more multicast service session identifiers and one or more activation times indicating the time(s) when transmission of multicast data for the one or more multicast service session starts; or
o retrieving, from a database, one or more activation times for one or more multicast service session identifiers, the one or more activation times indicating the time(s) when transmission of multicast data for one or more multicast service session starts; and
- determining (720) one or more session management functions that serve one or more multicast service sessions identified by the one or more multicast service session identifiers; and
- notifying (730) the one or more determined session management functions about delayed activation of one or more of the one or more multicast service sessions.

10. The apparatus of claim 9, further comprising means for:
- receiving one or more subscription requests from one or more session management functions with respect to notifications about delayed activation of one or more multicast service sessions;
- receiving the multicast session identifier as part of the subscription request from the session management function;
- assigning a unique subscription correlation identifier to the subscription request;
- providing the subscription correlation information in response to the subscription request from the session management function; and
- determining the one or more session management functions that serve one or more multicast service sessions identified by the one or more multicast service session identifiers based on the subscription request.

11. An apparatus (240) including a session management function, SMF, comprising means for
- receiving (810) at least one request to join a multicast service session from a user equipment;
- storing, (820) for the received join request that is accepted, information that the user equipment is participating in the multicast service session;
- receiving (830) a notification about the delayed activation of one or more multicast service sessions, wherein the delayed activation request comprises one or more activation times indicating the time(s) when transmission of multicast data for the one or more multicast service session starts;
- determining (840) at least one user equipment affected by the one or more multicast service sessions based on the stored information about the user equipment participating in the multicast service session;
- transmitting (850) to one or more access and mobility management functions, AMFs, serving the determined at least one user equipment, one or more delayed activation requests, wherein the one or more delayed activation requests comprise one or more activation times and one or more user equipment identifiers for the at least one user equipment.

12. The apparatus of claim 11, further comprising means for:
- subscribing at a multicast/broadcast session management function, MB-SMF, to notifications about the delayed activation of one or more multicast service;
- providing identifiers of one or more multicast service sessions as part of the subscription request to the multicast/broadcast session management function;
- receiving subscription correlation information in response to the subscription request from the multicast/broadcast session management function; and
- determining, when receiving a notification about the delayed activation of one or more multicast service sessions, the one or more multicast service sessions based on the subscription correlation information.

13. The apparatus of claim 9 or 11, wherein the notification about the delayed activation comprises:
- subscription correlation information and/or one or more multicast service session identifiers; and
- the one or more activation times.

14. The apparatus of any preceding claim,
wherein the one or more activation times are defined as
o a first time with repetition frequency; or
o fixed repeated times; or
o fixed daily times; or
o one or more start times; or
o one or more start and end times; or
o one or more start times and duration of a time period; or
o one or more absolute times; or
o time offset after the delayed activation request.

## Patentansprüche

1. Einrichtung (210), die Mittel für Folgendes umfasst:
- Empfangen von (410) mindestens einer Paginganforderung von einer Zugangs- und Mobilitätsverwaltungsfunktion;
- Übertragen (420) einer Dienstanforderung zur Zugangs- und Mobilitätsverwaltungsfunktion in Reaktion auf die mindestens eine Paginganforderung;
- wobei eine oder mehrere Aktivierungszeiten in der mindestens einen Paginganforderung oder in Reaktion (430) auf die Dienstanforderung beinhaltet sind, wobei die eine oder die mehreren Aktivierungszeiten die Zeit(en) anzeigen, zu der (denen) eine Übertragung von Multicastdaten für eine oder mehrere Multicastdienstsitzungen startet; und
- Starten des Empfangs (440) der Multicastdaten zu der einen oder den mehreren Aktivierungszeiten.

2. Einrichtung nach Anspruch 1, die Mittel für Folgendes umfasst:
Empfangen einer Freigabekontextnachricht von der Zugangs- und Mobilitätsverwaltungsfunktion in Reaktion auf die Dienstanforderung.

3. Einrichtung nach einem der Ansprüche 1 bis 2,
wobei die Paginganforderung in einem erweiterten Diskontinuitätsempfangs(eDRX)-Modus mit Paginghyperframes, PH, die gemäß erweiterten Diskontinuitätsempfangsprozeduren berechnet werden, zur Einrichtung übertragen wird.

4. Einrichtung (230), die eine Zugangs- und Mobilitätsverwaltungsfunktion, AMF, beinhaltet, die Mittel für Folgendes umfasst:
- Empfangen einer verzögerten Aktivierungsanforderung (510), die mindestens Folgendes umfasst:
o eine oder mehrere Aktivierungszeiten, die die Zeit(en) anzeigen, zu der (denen) eine Übertragung von Multicastdaten für eine oder mehrere Multicastdienstsitzungen startet; und
o eine oder mehrere Kennungen von einer oder mehreren Teilnehmereinrichtungen;
- Übertragen einer Paginganforderung (520) zu der einen oder den mehreren Teilnehmereinrichtungen;
- Empfangen einer Dienstanforderung (530) von der einen oder den mehreren Teilnehmereinrichtungen in Reaktion auf die Paginganforderung; und
- Übertragen (540) der einen oder der mehreren Aktivierungszeiten zu der einen oder den mehreren Teilnehmereinrichtungen in der Paginganforderung oder in Reaktion auf die Dienstanforderung.

5. Einrichtung nach Anspruch 4, die Mittel für Folgendes umfasst:
Übertragen einer Freigabekontextnachricht in Reaktion auf die Dienstanforderung zur Teilnehmereinrichtung.

6. Einrichtung nach Anspruch 4 oder 5,
wobei sich die eine oder die mehreren Teilnehmereinrichtungen in einem erweiterten Diskontinuitätsempfangs(eDRX)-Modus befinden und die Paginganforderung zu der einen oder den mehreren Teilnehmereinrichtungen in Paginghyperframes, PH, übertragen wird, die gemäß erweiterten Diskontinuitätsempfangsprozeduren berechnet werden.

7. Einrichtung nach einem der Ansprüche 4 bis 6,
wobei, wenn eine Aktivierungszeit der einen oder der mehreren Aktivierungszeiten als ein Zeitversatz nach der verzögerten Aktivierungsanforderung ausgedrückt wird, die Zeit zwischen dem Empfang der verzögerten Aktivierungsanforderung und dem Empfang der Dienstanforderung von der empfangenen Aktivierungszeit subtrahiert und das Ergebnis als Aktivierungszeit in Reaktion auf die Dienstanforderung bereitgestellt wird.

8. Einrichtung (260), die eine Anwendungsfunktion, AF, beinhaltet, die Mittel für Folgendes umfasst
- Übertragen (610) einer verzögerten Aktivierungsanforderung, wobei die verzögerte Aktivierungsanforderung eine oder mehrere Aktivierungszeiten umfasst, die die Zeit(en) anzeigen, zu der (denen) eine Übertragung von Multicastdaten für eine oder mehrere Multicastdienstsitzungen startet, und mindestens eines von Folgendem: einer oder mehreren Kennungen von einer oder mehreren Teilnehmereinrichtungen, einer oder mehreren Kennungen von einer oder mehreren Gruppen von Teilnehmereinrichtungen, einer oder mehreren Kennungen von einer oder mehreren Multicastdienstsitzungen; und
- Übertragen (620) der Multicastdaten für eine oder mehrere Multicastdienstsitzungen zu der einen oder den mehreren Aktivierungszeiten.

9. Einrichtung (250), die eine Multicastbroadcastsitzungsverwaltungsfunktion, MB SMF, beinhaltet, die Mittel für Folgendes umfasst
- mindestens eines von Folgendem:
o Empfangen (710) einer verzögerten Aktivierungsanforderung, wobei die verzögerte Aktivierungsanforderung eine oder mehrere Multicastdienstsitzungskennungen und eine oder mehrere Aktivierungszeiten umfasst, die die Zeit(en) anzeigen, zu der (denen) eine Übertragung für die eine oder die mehreren Multicastdienstsitzungen startet; oder
o Abrufen von einer oder mehreren Aktivierungszeiten für eine oder mehrere Multicastdienstsitzungskennungen von einer Datenbank, wobei die eine oder die mehreren Aktivierungszeiten die Zeit(en) anzeigen, zu der (denen) eine Übertragung von Multicastdaten für eine oder mehrere Multicastdienstsitzungen startet; und
- Bestimmen (720) von einer oder mehreren Sitzungsverwaltungsfunktionen, die eine oder mehrere Multicastdienstsitzungen bedienen, die von der einen oder den mehreren Multicastdienstsitzungskennungen identifiziert werden; und
- Benachrichtigen (730) der einen oder der mehreren bestimmten Sitzungsverwaltungsfunktionen über eine verzögerte Aktivierung von einer oder mehreren der einen oder der mehreren Multicastdienstsitzungen.

10. Einrichtung nach Anspruch 9, die ferner Mittel für Folgendes umfasst:
- Empfangen von einer oder mehreren Abonnementanforderungen von einer oder mehreren Sitzungsverwaltungsfunktionen mit Bezug auf Benachrichtigungen über eine verzögerte Aktivierung von einer oder mehreren Multicastdienstsitzungen;
- Empfangen der Multicastsitzungskennung als Teil der Abonnementanforderung von der Sitzungsverwaltungsfunktion;
- Zuweisen einer eindeutigen Abonnementkorrelationskennung zur Abonnementanforderung;
- Bereitstellen der Abonnementkorrelationsinformationen in Reaktion auf die Abonnementanforderung von der Sitzungsverwaltungsfunktion; und
- Bestimmen der einen oder der mehreren Sitzungsverwaltungsfunktionen, die eine oder mehrere Multicastdienstsitzungen bedienen, die von der einen oder den mehreren Multicastdienstsitzungskennungen identifiziert werden, auf Basis der Abonnementanforderung.

11. Einrichtung (240), die eine Sitzungsverwaltungsfunktion, SMF, beinhaltet, die Mittel für Folgendes umfasst
- Empfangen (810) von mindestens einer Anforderung zum Beitreten zu einer Multicastdienstsitzung von einer Teilnehmereinrichtung;
- Speichern (820) von Informationen, dass die Teilnehmereinrichtung an der Multicastdienstsitzung teilnimmt, für die empfangene Beitrittsanforderung, die akzeptiert wird;
- Empfangen (830) einer Benachrichtigung über die verzögerte Aktivierung von einer oder mehreren Multicastdienstsitzungen, wobei die verzögerte Aktivierungsanforderung eine oder mehrere Aktivierungszeiten umfasst, die die Zeit(en) anzeigen, zu der (denen) eine Übertragung von Multicastdaten für die eine oder die mehreren Multicastdienstsitzungen startet;
- Bestimmen (840) von mindestens einer Teilnehmereinrichtung, die von der einen oder den mehreren Multicastdienstsitzungen beeinträchtigt wird, auf Basis der gespeicherten Informationen über die Teilnehmereinrichtung, die an der Multicastdienstsitzung teilnimmt;
- Übertragen (850) von einer oder mehreren verzögerten Aktivierungsanforderungen zu einer oder mehreren Zugangs- und Mobilitätsverwaltungsfunktionen, AMFs, die die bestimmte mindestens eine Teilnehmereinrichtung bedienen, wobei die eine oder die mehreren verzögerten Aktivierungsanforderungen eine oder mehrere Aktivierungszeiten und eine oder mehrere Teilnehmereinrichtungskennungen für die mindestens eine Teilnehmereinrichtung umfassen.

12. Einrichtung nach Anspruch 11, die ferner Mittel für Folgendes umfasst:
- Abonnieren von Benachrichtigungen über die verzögerte Aktivierung von einem oder mehreren Multicastdienst an einer Multicat-/Broadcastsitzungsverwaltungsfunktion, MB SMF;
- Bereitstellen von Kennungen von einer oder mehreren Multicastdienstsitzungen als Teil der Abonnementanforderung für die Multicast-/Broadcastsitzungsverwaltungsfunktion;
- Empfangen von Abonnementkorrelationsinformationen in Reaktion auf die Abonnementanforderung von der Multicast-/Broadcastsitzungsverwaltungsfunktion; und
- Bestimmen der einen oder der mehreren Multicastdienstsitzungen auf Basis der Abonnementkorrelationsinformationen, wenn eine Benachrichtigung über die verzögerte Aktivierung von einer oder mehreren Multicastdienstsitzungen empfangen wird.

13. Einrichtung nach Anspruch 9 oder 11, wobei die Benachrichtigung über die verzögerte Aktivierung Folgendes umfasst:
- Abonnementkorrelationsinformationen und/oder eine oder mehrere Multicastdienstsitzungskennungen; und
- die eine oder die mehreren Aktivierungszeiten.

14. Einrichtung nach einem der vorhergehenden Ansprüche,
wobei die eine oder die mehreren Aktivierungszeiten als Folgendes definiert sind
o eine erste Zeit mit Wiederholfrequenz; oder
o feste wiederholte Zeiten; oder
o feste tägliche Zeiten; oder
o eine oder mehrere Startzeiten; oder
o eine oder mehrere Start- und Endzeiten; oder
o eine oder mehrere Startzeiten und eine Dauer einer Zeitperiode; oder
o eine oder mehrere absolute Zeiten; oder
o ein Zeitversatz nach der verzögerten Aktivierungsanforderung.

## Revendications

1. Appareil (210) comprenant des moyens pour :
- recevoir (410) d'une fonction de gestion d'accès et de mobilité au moins une demande de radiomessagerie ;
- en réponse à l'au moins une demande de radiomessagerie, transmettre (420) une demande de service à la fonction de gestion d'accès et de mobilité ;
- dans lequel un ou plusieurs temps d'activation sont inclus dans l'au moins une demande de radiomessagerie ou en réponse (430) à la demande de service, dans lequel les un ou plusieurs temps d'activation indiquent le ou les temps où commence une transmission de données de multidiffusion pour une ou plusieurs sessions de service de multidiffusion ; et
- démarrer la réception (440) des données de multidiffusion aux un ou plusieurs temps d'activation.

2. Appareil selon la revendication 1, comprenant des moyens pour :
recevoir de la fonction de gestion d'accès et de mobilité un message de contexte de libération en réponse à la demande de service.

3. Appareil selon l'une des revendications 1 et 2,
dans lequel la demande de radiomessagerie est transmise à l'appareil en mode de réception discontinue étendue, eDRX, dans des hypertrames de radiomessagerie, PH, calculées selon des procédures de réception discontinue étendue.

4. Appareil (230) comportant une fonction de gestion d'accès et de mobilité, AMF, comprenant des moyens pour :
- recevoir une demande d'activation retardée (510) comprenant au moins :
o un ou plusieurs temps d'activation indiquant le ou les temps où commence une transmission de données de multidiffusion pour une ou plusieurs sessions de service de multidiffusion ; et
o un ou des identifiants d'un ou plusieurs équipements utilisateurs ;
- transmettre une demande de radiomessagerie (520) aux un ou plusieurs équipements utilisateurs ;
- recevoir des un ou plusieurs équipements utilisateurs une demande de service (530) en réponse à la demande de radiomessagerie ; et
- transmettre (540) les un ou plusieurs temps d'activation aux un ou plusieurs équipements utilisateurs dans la demande de radiomessagerie ou en réponse à la demande de service.

5. Appareil selon la revendication 4, comprenant des moyens pour :
transmettre un message de contexte de libération à l'équipement utilisateur en réponse à la demande de service.

6. Appareil selon la revendication 4 ou 5,
dans lequel les un ou plusieurs équipements utilisateurs sont en mode de réception discontinue étendue, eDRX, et la demande de radiomessagerie est transmise aux un ou plusieurs équipements utilisateurs dans des hypertrames de radiomessagerie, PH, calculées selon des procédures de réception discontinue étendue.

7. Appareil selon l'une des revendications 4 à 6,
dans lequel lorsqu'un temps d'activation des un ou plusieurs temps d'activation est exprimé sous forme d'un décalage temporel après la demande d'activation retardée, le temps entre la réception de la demande d'activation retardée et la réception de la demande de service est soustrait du temps d'activation reçu, et le résultat est fourni comme temps d'activation en réponse à la demande de service.

8. Appareil (260) comportant une fonction d'application, AF, comprenant des moyens pour
- transmettre (610) une demande d'activation retardée, dans lequel la demande d'activation retardée comprend un ou plusieurs temps d'activation indiquant le ou les temps où commence une transmission de données de multidiffusion pour une ou plusieurs sessions de service de multidiffusion, et au moins un parmi : un ou des identifiants d'un ou plusieurs équipements utilisateurs, un ou des identifiants d'un ou plusieurs groupes d'équipements utilisateurs, un ou des identifiants d'une ou plusieurs sessions de service de multidiffusion ; et
- transmettre (620) les données de multidiffusion pour une ou plusieurs sessions de service de multidiffusion aux un ou plusieurs temps d'activation.

9. Appareil (250) comportant une fonction de gestion de session de diffusion/multidiffusion, MB SMF, comprenant des moyens pour
- effectuer au moins l'une des opérations suivantes :
o recevoir (710) une demande d'activation retardée, dans lequel la demande d'activation retardée comprend un ou plusieurs identifiants de sessions de service de multidiffusion et un ou plusieurs temps d'activation indiquant le ou les temps où commence une transmission de données de multidiffusion pour les une ou plusieurs sessions de service de multidiffusion ; ou
o récupérer dans une base de données un ou plusieurs temps d'activation pour un ou plusieurs identifiants de sessions de service de multidiffusion, les un ou plusieurs temps d'activation indiquant le ou les temps où commence une transmission de données de multidiffusion pour une ou plusieurs sessions de service de multidiffusion ; et
- déterminer (720) une ou plusieurs fonctions de gestion de session qui desservent une ou plusieurs sessions de service de multidiffusion identifiées par les un ou plusieurs identifiants de sessions de service de multidiffusion ; et
- notifier (730) aux une ou plusieurs fonctions de gestion de session déterminées une activation retardée d'une ou plusieurs de la ou des sessions de service de multidiffusion.

10. Appareil selon la revendication 9, comprenant en outre des moyens pour :
- recevoir d'une ou plusieurs fonctions de gestion de session une ou plusieurs demandes d'abonnement à des notifications concernant une activation retardée d'une ou plusieurs sessions de service de multidiffusion ;
- recevoir de la fonction de gestion de session l'identifiant de session de multidiffusion dans le cadre de la demande d'abonnement ;
- attribuer un identifiant de corrélation d'abonnement unique à la demande d'abonnement ;
- fournir les informations de corrélation d'abonnement en réponse à la demande d'abonnement en provenance de la fonction de gestion de session ; et
- déterminer les une ou plusieurs fonctions de gestion de session qui desservent une ou plusieurs sessions de service de multidiffusion identifiées par les un ou plusieurs identifiants de sessions de service de multidiffusion sur la base de la demande d'abonnement.

11. Appareil (240) comportant une fonction de gestion de session, SMF, comprenant des moyens pour
- recevoir (810) d'un équipement utilisateur au moins une demande de participation à une session de service de multidiffusion ;
- pour la demande de participation reçue qui est acceptée, stocker (820) des informations indiquant que l'équipement utilisateur participe à la session de service de multidiffusion ;
- recevoir (830) une notification concernant l'activation supprimée d'une ou plusieurs sessions de service de multidiffusion, dans lequel la demande d'activation retardée comprend un ou plusieurs temps d'activation indiquant le ou les temps où commence une transmission de données de multidiffusion pour les une ou plusieurs sessions de service de multidiffusion ;
- déterminer (840) au moins un équipement utilisateur affecté par les une ou plusieurs sessions de service de multidiffusion sur la base des informations stockées concernant l'équipement utilisateur participant à la session de service de multidiffusion ;
- transmettre (850) à une ou plusieurs fonctions de gestion d'accès et de mobilité, AMF, desservant l'au moins un équipement utilisateur déterminé une ou plusieurs demandes d'activations retardées, dans lequel les une ou plusieurs demandes d'activations retardées comprennent un ou plusieurs temps d'activation et un ou plusieurs identifiants d'équipement utilisateur pour l'au moins un équipement utilisateur.

12. Appareil selon la revendication 11, comprenant en outre des moyens pour :
- s'abonner au niveau d'une fonction de gestion de session de diffusion/multidiffusion, MB-SMF, à des notifications concernant l'activation supprimée d'un ou plusieurs services de multidiffusion ;
- fournir des identifiants d'une ou plusieurs sessions de service de multidiffusion dans le cadre de la demande d'abonnement à la fonction de gestion de session de diffusion/multidiffusion ;
- recevoir de la fonction de gestion de session de diffusion/multidiffusion des informations de corrélation d'abonnement en réponse à la demande d'abonnement ; et
- lors de la réception d'une notification concernant l'activation supprimée d'une ou plusieurs sessions de service de multidiffusion, déterminer les une ou plusieurs sessions de service de multidiffusion sur la base des informations de corrélation d'abonnement.

13. Appareil selon la revendication 9 ou 11, dans lequel la notification concernant l'activation supprimée comprend :
- des informations de corrélation d'abonnement et/ou un ou plusieurs identifiants de sessions de service de multidiffusion ; et
- les un ou plusieurs temps d'activation.

14. Appareil selon l'une des revendications précédentes, dans lequel les un ou plusieurs temps d'activation sont définis sous la forme de
o un premier temps avec une fréquence de répétition ; ou
o des temps répétés fixes ; ou
o des moments quotidiens fixes ; ou
o un ou plusieurs temps de démarrage ; ou
o un ou plusieurs temps de démarrage et de fin ; ou
o un ou plusieurs temps de démarrage et une durée d'une période de temps ; ou
o un ou plusieurs temps absolus ; ou
o un décalage temporel après la demande d'activation retardée.
